# FASCICULE DE BREVET EUROPEEN

(11) **EP 4 332 813 B1**
(45) Date de publication et mention de la délivrance du brevet: **14.08.2024**
(21) Numéro de dépôt: 23192662.7
(22) Date de dépôt: 22.08.2023
(51) Int. Cl.: G06F 21/62, H04L 9/40, H04M 3/51

(54) **PROCÉDÉ DE PRÉSERVATION DE LA CONFIDENTIALITÉ DE NUMÉROS DE TÉLÉPHONE UTILISÉS POUR DES CAMPAGNES DE PROSPECTION TÉLÉPHONIQUE**
VERFAHREN ZUR BEWAHRUNG DER PRIVATSPHÄRE VON TELEFONNUMMERN FÜR TELEFON-RECHERCHEKAMPAGNEN
METHOD FOR PRESERVING PRIVACY OF TELEPHONE NUMBERS USED FOR TELEPHONE PROSPECTING CAMPAIGNS

(30) Priorité: 01.09.2022 FR 2208782
(43) Date de publication de la demande: 06.03.2024
(73) Titulaire: Manifone, 56000 Vannes (FR)
(72) Inventeur: GOUDJIL, Lounis, 56000 Vannes (FR)
(74) Mandataire: Dupuis-Latour, Dominique

(56) Documents cités:
- CN-A- 110 113 503
- CN-A- 110 121 010

## Description

L'invention concerne un procédé visant à préserver la confidentialité de numéros de téléphone utilisés dans le cadre de campagnes de prospection téléphonique collective faisant intervenir plusieurs entités distinctes, indépendantes entre elles et le plus souvent géographiquement distantes.

Plus précisément, la campagne de prospection est initiée par un commanditaire (ci-après "donneur d'ordre") qui détient des listes de numéros de téléphone (ci-après "numéros") qui sont des numéros de destinataires respectifs (ci-après "cibles") que le donneur d'ordre souhaite contacter de façon systématique par la voie d'un appel téléphonique, à diverses fins de sollicitation ou de renseignement, telles que prospection de clientèle, sondage, offres commerciales, propositions contractuelles, etc.

Le plus souvent, le donneur d'ordre ne procède pas lui-même à ces appels téléphoniques, mais les fait exécuter par un prestataire tiers spécialisé (ci-après "sous-traitant") disposant de l'infrastructure d'un centre d'appels avec son personnel spécialisé, formé à ce type de démarche particulière.

Pour mettre en oeuvre la campagne de prospection, le donneur d'ordre confie au sous-traitant la liste des numéros des cibles devant être appelées au téléphone ainsi que l'argumentaire à développer, les questions à poser, les informations à obtenir et à conserver, etc.

Le risque existe toutefois, malgré toutes les précautions juridiques ou techniques qui peuvent être prises par le donneur d'ordre lors de la communication au sous-traitant des listes de numéros, que ces listes - qui ont en elles-mêmes une importante valeur commerciale - fassent l'objet de détournements ou de captation lors de leur transfert au sous-traitant prestataire ou de leur utilisation par ce dernier.

De fait, le besoin existe de disposer d'un procédé qui, par des moyens techniques non susceptibles d'être détournés par des tiers, puisse préserver la confidentialité des listes de numéros soumises aux sous-traitants par un donneur d'ordre, en garantissant à ce dernier qu'il sera impossible de détourner les listes de numéros de façon incontrôlée, aussi bien i) dans les échanges de données entre le donneur d'ordre et les sous-traitants que ii) au niveau des sous-traitants lors de l'exécution des appels aux cibles.

Il s'agit également de disposer d'un procédé qui, de plus, permette de limiter l'utilisation des numéros à un certain nombre de sous-traitants autorisés, et seulement à ceux-ci, et si besoin d'assortir en outre cette utilisation de conditions supplémentaires telles que durée limite d'utilisation, nombre d'appels successifs autorisés à une même cible, horaires d'appel, etc.

Le brevet CN 110 121 010 B divulgue un procédé permettant à une centrale d'appel de faire exécuter des appels téléphoniques par de multiples agents extérieurs sans leur révéler les numéros des prospects à solliciter. Les numéros sont communiqués sous forme chiffrée, et la centrale d'appel déchiffre le numéro pour établir l'appel, jouant ainsi vis-à-vis des agents un rôle d'intermédiation dans le processus. La technique décrite ne procure toutefois pas de protection suffisante à l'encontre de manipulations ou de détournements de numéros par les agents, ou à l'encontre d'usurpations par des tiers qui ne seraient pas des agents autorisés.

### Exposé de l'invention

Pour pallier ces limitations, l'invention propose de faire intervenir dans le système distribué décrit ci-dessus (donneur d'ordre, sous-traitant, et cibles à contacter) une entité tierce (ci-après "tiers de confiance") en communication fonctionnelle avec à la fois le donneur d'ordre, le ou les sous-traitants et les cibles.

Le concept de base de l'invention consiste, avec cette plateforme formant tiers de confiance, à :
n'échanger des listes de numéros en clair qu'entre le donneur d'ordre et le tiers de confiance,
n'envoyer au sous-traitant que des numéros sous une forme chiffrée qu'il ne pourra pas rétablir en clair, donc sous une forme n'ayant en soi aucune valeur commerciale, et
s'assurer qu'un sous-traitant qui s'adresse au tiers de confiance pour établir et acheminer un appel téléphonique est bien un sous-traitant effectivement autorisé au préalable par le donneur d'ordre.

Essentiellement, lorsque le sous-traitant souhaite appeler une cible, l'appel est émis non vers la cible (qui n'est pas joignable par le sous-traitant puisque celui-ci ne dispose pas du numéro en clair), mais vers le tiers de confiance (qui est capable de déchiffrer un numéro chiffré que lui aura adressé le sous-traitant, et d'appeler ce numéro). Après avoir appelé la cible, le tiers de confiance met en relation téléphonique le sous-traitant avec cette cible, pour que le sous-traitant puisse exécuter les tâches spécifiques à la campagne de prospection proprement dite qui lui ont été confiées par le donneur d'ordre.

Plus précisément, l'invention propose un procédé tel qu'exposé par la revendication 1.

Les sous-revendications visent des mises en oeuvre particulières, préférentielles et avantageuses, de l'invention.

### Brève description des dessins

On va maintenant décrire un exemple, non limitatif, de mise en oeuvre de l'invention, en référence au dessin annexé.

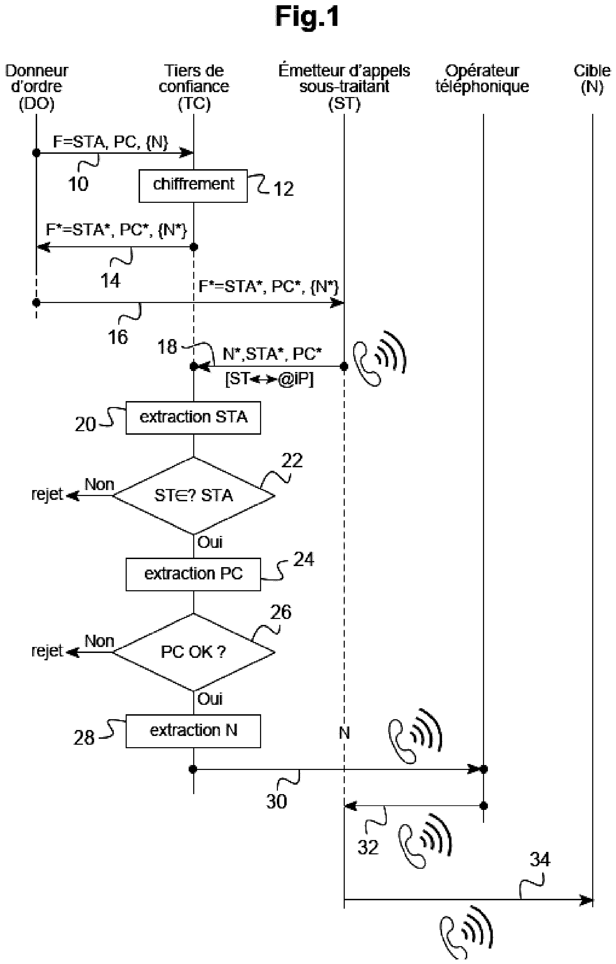

La Figure 1 est un diagramme présentant les diverses étapes successives de mise en oeuvre du procédé de l'invention.

### Description détaillée d'un mode de réalisation de l'invention

Comme illustré sur la Figure 1, l'invention est mise en oeuvre au sein d'un système distribué comprenant :
un donneur d'ordre DO, détenant des listes {N} de numéros de téléphone en clair,
une pluralité de cibles, chacune identifiée par un numéro de téléphone propre N,
un ou plusieurs émetteurs d'appels, qui sont des sous-traitants ST vis-à-vis du donneur d'ordre DO, ces émetteurs d'appels étant des plateformes spécialisées disposant de l'infrastructure et du personnel formé aux campagnes de prospection téléphoniques auprès de cibles dont une liste aura été fournie par le donneur d'ordre DO,
une plateforme formant tiers de confiance TC, en communication avec le donneur d'ordre DO, le(s) sous-traitant(s) ST, et les cibles, éventuellement, un ou plusieurs opérateurs téléphoniques en relation avec le tiers de confiance TC.

Les sous-traitants ST sont indépendants du donneur d'ordre et du tiers de confiance, et le plus souvent géographiquement éloignés de ces derniers. En revanche, l'opérateur téléphonique et le tiers de confiance TC peuvent éventuellement dépendre d'un même acteur économique, et/ou être géographiquement situés en un même emplacement, voire hébergés sur un même serveur.

Dans une étape préalable (étape 10), le donneur d'ordre DO transmet au tiers de confiance TC, via une interface mise à sa disposition par ce dernier, un fichier F contenant :
des données STA permettant de définir une liste de sous-traitants ST limitativement autorisés par le donneur d'ordre DO, avantageusement, mais non nécessairement, un certain nombre de paramètres de contrôle PC tels que : durée de validité dans le temps (date de péremption), fréquence des appels, plages horaires autorisées pour les appels, etc., et
une liste {N} de numéros à appeler dans le cadre d'une campagne de prospection à faire exécuter par un ou plusieurs sous-traitants.

L'étape suivante (étape 12) consiste à opérer au niveau du tiers de confiance TC un chiffrement des informations du fichier F, pour produire un fichier F* contenant sous une forme chiffrée les informations STA*, PC* et {N*} du fichier F reçu du donneur d'ordre DO.

Le fichier F* est retourné (étape 14) au donneur d'ordre DO et conservé par ce dernier.

Au lancement de la campagne de prospection, dans une phase ultérieure (qui peut éventuellement être enchaînée directement avec les étapes 10, 12, 14 précédentes), le donneur d'ordre DO transmet à son (ses) sous-traitant(s) ST le fichier F* contenant les informations chiffrées (étape 16).

Le (ou chaque) sous-traitant ST, à réception, intègre ces informations chiffrées dans son outil de numérotation et procède alors à l'émission des appels.

À chaque lancement d'un appel, le sous-traitant ST transmet au tiers de confiance TC au moyen de son outil de numérotation un numéro chiffré N* de la liste de numéros {N*}, ainsi que les informations chiffrées STA* et PC* (étape 18).

Le tiers de confiance TC reçoit cet appel téléphonique et procède aux opérations suivantes :
déchiffrement et extraction de l'information STA à partir de la version chiffrée STA* (étape 20). Si le déchiffrement échoue, l'appel téléphonique est rejeté ;
si le déchiffrement est réussi, vérification (étape 22) que le sous-traitant à l'origine de l'appel téléphonique est bien un sous-traitant autorisé par le donneur d'ordre. Cette vérification peut être faite simplement par analyse de l'adresse IP (@IP) indiquant l'origine du sous-traitant ST, et/ou par toute technique connue d'authentification forte, de type clé partagée ou autre. Si le sous-traitant n'est pas un sous-traitant autorisé, l'appel est rejeté ;
ensuite, extraction (étape 24) et vérification (étape 26) des paramètres de contrôle PC. Si l'un des paramètres de contrôle n'est pas respecté, par exemple si la date de péremption indiquée par le donneur d'ordre est dépassée, l'appel est rejeté ;
si les paramètres de contrôle sont tous validés, le numéro N en clair est extrait (étape 28) et acheminé (étape 30) vers un opérateur téléphonique de terminaison.

L'opérateur téléphonique établit l'appel téléphonique et met en relation le sous-traitant ST avec la cible N appelée (étapes 32 et 34), de manière que le sous-traitant puisse accomplir la tâche pour laquelle il a été missionné par le donneur d'ordre DO.

On notera que, de façon caractéristique de l'invention, dans le procédé que l'on vient de décrire le numéro N en clair n'est jamais mis à disposition du (des) sous-traitant(s) ST, qui ne dispose(nt) que d'une version chiffrée N* de ce numéro, et de la même façon pour les listes de sous-traitants autorisés STA* et les paramètres de contrôle PC*, qui ne lui sont fournis que dans une version qui n'est pas en soi exploitable.

On notera également que la communication téléphonique proprement dite vers la cible est initiée par le tiers de confiance TC et non par le sous-traitant ST, qui n'est mis en relation avec la cible qu'après que la communication téléphonique a été établie par l'opérateur téléphonique (étapes 32, 34) sur l'initiative du tiers de confiance TC (étape 30).

## Revendications

1. Un procédé de préservation de la confidentialité de numéros de téléphone utilisés dans le cadre de campagnes de prospection téléphonique, le procédé étant mis en oeuvre par un système distribué comprenant :
un donneur d'ordre (DO), détenant des listes de numéros de téléphone en clair ;
une pluralité de cibles, chacune identifiée par un numéro de téléphone (N) propre ;
au moins un émetteur d'appels formant au moins un sous-traitant (ST), apte à établir une communication avec chacune des cibles de la liste de cibles sur requête du donneur d'ordre (DO) ; et
une plateforme formant tiers de confiance (TC), en communication opérante avec le donneur d'ordre (DO), l'au moins un sous-traitant (ST) et les cibles,
dans lequel le procédé comprend la mise en oeuvre d'un protocole de préservation de la confidentialité des numéros de téléphone en clair à l'égard de l'au moins un sous-traitant (ST), comprenant les étapes successives suivantes :
dans une étape préalable :
a) par le donneur d'ordre (DO), envoi (10) au tiers de confiance (TC) d'un message en clair (F) contenant au moins : une donnée d'identification de sous-traitant(s) autorisé(s) (STA), et un ensemble de numéros de téléphone ({N}) ;
b) par le tiers de confiance (TC), chiffrement (12) du message en clair (F), pour donner un message chiffré (F*) contenant des versions chiffrées (STA*, {N*}) de la donnée d'identification de sous-traitant(s) autorisé(s) et des numéros de téléphone ; et
c) par le tiers de confiance (TC), envoi (14) au donneur d'ordre (DO) du message chiffré (F*) ;
dans une étape ultérieure :
d) par le donneur d'ordre (DO), envoi (16) à l'au moins un sous-traitant (ST) du message chiffré (F*) ;
e) par l'au moins un sous-traitant (ST), envoi (18) au tiers de confiance (TC) du message chiffré (F*) avec un numéro de téléphone chiffré (N*) ;
f) par le tiers de confiance (TC) : déchiffrement et extraction (20) de la donnée d'identification de sous-traitant(s) autorisé(s) (STA) ; vérification (22) que le message reçu à l'étape d) provient d'un sous-traitant autorisé ; poursuite de la procédure en cas de vérification avérée ; et abandon de la procédure dans le cas contraire ;
h) par le tiers de confiance (TC), déchiffrement et extraction (28) du numéro de téléphone chiffré (N*) ;
i) par le tiers de confiance (TC), mise en relation téléphonique (30, 32, 34) de l'au moins un sous-traitant (ST) avec la cible à partir du numéro de téléphone (N) déchiffré à l'étape h), sans transmission à l'au moins un sous-traitant (ST) du numéro de téléphone déchiffré (N).

2. Le procédé de la revendication 1, dans lequel la relation téléphonique (30, 32, 34) établie à l'étape i) entre l'au moins un sous-traitant (ST) et la cible est une relation indirecte établie via un opérateur téléphonique tiers de terminaison, l'opérateur téléphonique recevant du tiers de confiance (TC) le numéro de téléphone (N) déchiffré à l'étape h).

3. Le procédé de la revendication 1,
dans lequel le message en clair (F) envoyé par le donneur d'ordre (DO) au tiers de confiance (TC) contient en outre au moins un paramètre de contrôle (PC), et le message chiffré (F*) envoyé à l'au moins un sous-traitant (ST) à l'étape d) et envoyé au tiers de confiance (TC) à l'étape e) contient une version chiffrée (PC*) de l'au moins un paramètre de contrôle (PC),
et dans lequel le procédé comprend en outre, entre les étapes f) et h), une étape de :
g) par le tiers de confiance (TC) : déchiffrement et extraction (24) de l'au moins un paramètre de contrôle (PC) ; vérification (26) de ce que l'au moins un paramètre de contrôle (PC) est conforme à au moins un critère prédéterminé ; poursuite de la procédure en cas de conformité avérée ; et abandon de la procédure dans le cas contraire.

4. Le procédé de la revendication 3, dans lequel l'au moins un paramètre de contrôle (PC) est une donnée de contrôle comprenant : durée de validité dans le temps, fréquence d'appel, et/ou plage horaire d'appel.

5. Le procédé de la revendication 3, dans lequel l'au moins un paramètre de contrôle (PC) est un index pointant vers au moins une rubrique d'un fichier de données de contrôle conservé au niveau du tiers de confiance (TC).

6. Le procédé de la revendication 1, dans lequel la donnée d'identification de sous-traitant(s) autorisé(s) (STA) du message chiffré envoyé au tiers de confiance (TC) comprend des identifiants des sous-traitants autorisés.

7. Le procédé de la revendication 1, dans lequel la donnée d'identification de sous-traitant(s) autorisé(s) (STA) du message chiffré envoyé au tiers de confiance (TC) est un index pointant vers au moins une rubrique d'un fichier d'identifiants de sous-traitants autorisés conservé au niveau du tiers de confiance (TC).

8. Le procédé de la revendication 1, dans lequel la vérification à l'étape f) que le message reçu à l'étape d) provient d'un sous-traitant autorisé met en oeuvre une technique de vérification basée sur des adresses IP (@IP) des sous-traitants autorisés, et/ou une technique d'authentification forte, de préférence une authentification à clé partagée.

## Patentansprüche

1. Ein Verfahren zur Bewahrung der Vertraulichkeit von Telefonnummern, die im Rahmen von Telefonmarketingkampagnen verwendet werden, wobei das Verfahren durchgeführt wird durch ein verteiltes System, umfassend:
einen Auftraggeber (DO), der über Telefonnummernlisten im Klartext verfügt;
eine Mehrzahl von Zielpersonen, die jede durch eine eigene Telefonnummer (N) identifiziert ist;
wenigstens einen Rufsender, der wenigstens einen Unterauftragnehmer (ST) bildet, der imstande ist, eine Verbindung mit jeder der Zielpersonenliste auf Anforderung des Auftraggebers (DO) aufzubauen; und
eine Plattform, die eine vertrauenswürdige Drittpartei (TC) bildet, in operativer Verbindung mit dem Auftraggeber (DO), dem wenigstens einen Unterauftragnehmer (ST) und den Zielpersonen,
wobei das Verfahren das Ausführen eines Protokolls zur Bewahrung der Vertraulichkeit der Telefonnummern im Klartext gegenüber dem wenigstens einen Unterauftragnehmer (ST) umfasst, umfassend die folgenden aufeinanderfolgenden Schritte:
in einem vorausgehenden Schritt:
a) durch den Auftraggeber (DO), Senden (10) einer Nachricht im Klartext (F) an die vertrauenswürdige Drittpartei (TC), die wenigstens Folgendes enthält: einen Datensatz zur Identifizierung des/der autorisierten Unterauftragnehmer(s) (STA) und eine Menge an Telefonnummern (N);
b) durch die vertrauenswürdige Drittpartei (TC), Verschlüsseln (12) der Nachricht im Klartext (F), um eine verschlüsselte Nachricht (F*) zu ergeben, die verschlüsselte Versionen (STA*, {N*}) des Datensatzes zur Identifizierung des/der autorisierten Unterauftragnehmer(s) (STA) und der Telefonnummern enthält; und
c) durch die vertrauenswürdige Drittpartei (TC), Senden (14) der verschlüsselten Nachricht (F*) an den Auftraggeber (DO);
in einem weiteren Schritt:
d) durch den Auftraggeber (DO), Senden (16) der verschlüsselten Nachricht (F*) an den wenigstens einen Unterauftragnehmer (ST);
e) durch den wenigstens einen Unterauftragnehmer (ST), Senden (18) der verschlüsselten Nachricht (F*) an die vertrauenswürdige Drittpartei (TC) mit einer verschlüsselten Telefonnummer (N*);
f) durch die vertrauenswürdige Drittpartei (TC): Entschlüsseln und Extrahieren (20) des Datensatzes zur Identifizierung des/der autorisierten Unterauftragnehmer(s) (STA); Überprüfen (22), dass die in Schritt d) empfangene Nachricht von einem autorisierten Unterauftragnehmer stammt; Fortsetzen der Prozedur für den Fall einer erfolgreichen Überprüfung; und Abbrechen der Prozedur für den gegenteiligen Fall;
h) durch die vertrauenswürdige Drittpartei (TC), Entschlüsseln und Extrahieren (28) der verschlüsselten Telefonnummer (N*);
i) durch die vertrauenswürdige Drittpartei (TC), Setzen des wenigstens einen Unterauftragnehmers (ST) in eine telefonische Verbindung (30, 32, 34) mit der Zielperson ausgehend von der in Schritt h) entschlüsseltem Telefonnummer (N), ohne Übermittlung der entschlüsseltem Telefonnummer (N) an den wenigstens einen Unterauftragnehmer (ST).

2. Das Verfahren nach Anspruch 1, wobei die in Schritt i) aufgebaute telefonische Verbindung (30, 32, 34) zwischen dem wenigstens einen Unterauftragnehmer (ST) und der Zielperson eine indirekte Verbindung ist, die über einen Telefondrittanbieter aufgebaut wird, wobei der Telefonanbieter von der vertrauenswürdigen Drittpartei (TC) die in Schritt h) entschlüsselte Telefonnummer (N) empfängt.

3. Das Verfahren nach Anspruch 1,
wobei die vom Auftraggeber (DO) an die vertrauenswürdige Drittpartei (TC) gesendete Nachricht im Klartext (F) ferner wenigstens einen Kontrollparameter (PC) enthält und die in Schritt d) an den wenigstens einen Unterauftragnehmer (ST) gesendete und in Schritt e) an die vertrauenswürdige Drittpartei (TC) gesendete verschlüsselte Nachricht (F*) eine verschlüsselte Version (PC*) des wenigstens einen Kontrollparameters (PC) enthält
und wobei das Verfahren ferner, zwischen den Schritten f) und h), einen Schritt umfasst zum:
g) durch die vertrauenswürdige Drittpartei (TC): Entschlüsseln und Extrahieren (24) des wenigstens einen Kontrollparameters (PC); Überprüfen (26), dass der wenigstens eine Kontrollparameter (PC) mit wenigstens einem vorherbestimmten Kriterium übereinstimmt; Fortsetzen der Prozedur für den Fall einer erfolgreichen Übereinstimmung; und Abbrechen der Prozedur für den gegenteiligen Fall.

4. Das Verfahren nach Anspruch 3, wobei der wenigstens eine Kontrollparameter (PC) ein Kontrolldatensatz ist, umfassend: zeitliche Gültigkeitsdauer, Anrufhäufigkeit und/oder Rufzeitfenster.

5. Das Verfahren nach Anspruch 3, wobei der wenigstens eine Kontrollparameter (PC) ein Index ist, der auf wenigstens eine Rubrik einer Datei mit Kontrolldatensätzen verweist, die im Bereich der vertrauenswürdigen Drittpartei (TC) aufbewahrt wird.

6. Das Verfahren nach Anspruch 1, wobei der Datensatz zur Identifizierung des/der autorisierten Unterauftragnehmer(s) (STA) der an die vertrauenswürdige Drittpartei (TC) gesendeten verschlüsselten Nachricht Kennungen der autorisierten Unterauftragnehmer umfasst.

7. Das Verfahren nach Anspruch 1, wobei der Datensatz zur Identifizierung des/der autorisierten Unterauftragnehmer(s) (STA) der an die vertrauenswürdige Drittpartei (TC) gesendeten verschlüsselten Nachricht ein Index ist, der auf wenigstens eine Rubrik einer Datei mit Kennungen von autorisierten Unterauftragnehmern verweist, die im Bereich der vertrauenswürdigen Drittpartei (TC) aufbewahrt wird.

8. Das Verfahren nach Anspruch 1, wobei das Überprüfen in Schritt f), dass die in Schritt d) empfangene Nachricht von einem autorisierten Unterauftragnehmer stammt, eine Überprüfungstechnik verwendet, die auf IP-Adressen (@IP) der autorisierten Unterauftragnehmer und/oder einer starken Authentifizierungstechnik, bevorzugt einer Shared Key-Authentifizierung, basiert.

## Claims

1. A method for preserving confidentiality of telephone numbers used in telemarketing campaigns, the method being implemented by a distributed system comprising:
an originator (DO), holding lists of unencrypted telephone numbers;
a plurality of targets, each identified by its own telephone number (N);
at least one call emitter forming at least one subcontractor (ST),
capable of establishing communication with each of the targets on the target list at the request of the originator (DO); and
a platform forming a trusted third party (TC), in operational communication with the originator (DO), the at least one subcontractor (ST), and the targets,
wherein the method comprises the implementation of a protocol for preserving confidentiality of the unencrypted telephone numbers towards the at least one subcontractor (ST), comprising the following successive steps:
in a preliminary step:
a) by the originator (DO), sending (10) to the trusted third party (TC) an unencrypted message (F) containing at least: authorized subcontractor(s) (STA) identifying data, and a set of telephone numbers ({N});
b) by the trusted third party (TC), encrypting (12) the unencrypted message (F), to provide an encrypted message (F*) containing encrypted versions (STA*, {N*}) of the authorized subcontractor(s) identifying data and the telephone numbers; and
c) by the trusted third party (TC), sending (14) the encrypted message (F*) to the originator (DO);
in a subsequent step:
d) by the originator (DO), sending (16) the encrypted message (F*) to the at least one subcontractor (ST);
e) by the at least one subcontractor (ST), sending (18) the encrypted message (F*) with an encrypted telephone number (N*) to the trusted third party (TC);
f) by the trusted third party (TC): decrypting and extracting (20) of the authorized subcontractor(s) (STA) identifying data; checking (22) that the message received at step d) comes from an authorized subcontractor; continuing the procedure in case of successful checking; and abandoning the procedure in the opposite case;
h) by the trusted third party (TC), decrypting and extracting (28) the encrypted telephone number (N*);
i) by the trusted third party (TC), establishing a telephone connection (30, 32, 34) of the at least one subcontractor (ST) with the target from the telephone number (N) decrypted at step h), without transmitting the decrypted telephone number (N) to the at least one subcontractor (ST).

2. The method of claim 1, wherein the telephone connection (30, 32, 34) established at step i) between the at least one subcontractor (ST) and the target is an indirect connection established via a third-party termination telephone operator, the telephone operator receiving from the trusted third party (TC) the telephone number (N) decrypted at step h).

3. The method of claim 1,
wherein the unencrypted message (F) sent by the originator (DO) to the trusted third party (TC) further contains at least one control parameter (PC), and the encrypted message (F*) sent at the at least one subcontractor (ST) at step d) and sent to the trusted third party (TC) at step e) contains an encrypted version (PC*) of the at least one control parameter (PC),
and wherein the method further comprises, between steps f) and h), a step of:
g) by the trusted third party (TC): decrypting and extracting (24) the at least one control parameter (PC); checking (26) that the at least one control parameter (PC) is compliant with at least one predetermined criterion; continuing the procedure in case of successful checking; and abandoning the procedure in the opposite case.

4. The method of claim 3, wherein the at least one control parameter (PC) is a control data comprising: validity period, call frequency and/or call time range.

5. The method of claim 3, wherein the at least one control parameter (PC) is an index pointing towards at least one entry of a control data file stored at the trusted third party (TC).

6. The method of claim 1, wherein the authorized subcontractor(s) (STA) identifying data of the encrypted message sent to the trusted third party (TC) comprises authorized subcontractor identifiers.

7. The method of claim 1, wherein the authorized subcontractor(s) (STA) identifying data of the encrypted message sent to the trusted third party (TC) is an index pointing towards at least one entry of an authorized subcontractor identifier file stored at the trusted third party (TC).

8. The method of claim 1, wherein the checking at step f) that the message received at step d) comes from an authorized subcontractor implements a checking technique based on IP addresses (@IP) of the authorized subcontractors, and/or a strong authentication technique, preferably a shared key authentication.
